# FASCICULE DE BREVET EUROPEEN

(11) **EP 3 767 474 B1**
(45) Date de publication et mention de la délivrance du brevet: **19.04.2023**
(21) Numéro de dépôt: 20185817.2
(22) Date de dépôt: 14.07.2020
(51) Int. Cl.: G06F 11/34

(54) **PROCÉDÉ D'ANALYSE DE CONSOMMATION DE RESSOURCE D'UNE INFRASTRUCTURE INFORMATIQUE, ALERTE ET DIMENSIONNEMENT**
VERFAHREN ZUR ANALYSE DES RESSOURCENVERBRAUCHS EINER IT-INFRASTRUKTUR, ALARM UND DIMENSIONIERUNG
METHOD FOR ANALYSING RESOURCE CONSUMPTION OF A COMPUTER INFRASTRUCTURE, ALERT AND SIZING

(30) Priorité: 15.07.2019 FR 1907972
(43) Date de publication de la demande: 20.01.2021
(73) Titulaire: Bull SAS, 78340 Les Clayes-sous-Bois (FR)
(72) Inventeur: BRUNO, Demeilliez, 38380 Saint Laurent du Pont (FR); GILLES, Menigot, 38190 Froges (FR)
(74) Mandataire: Cabinet Camus Lebkiri

(56) Documents cités:
- EP-A1- 1 550 974
- CN-A- 109 714 395
- US-A1- 2011 246 837
- US-A1- 2017 091 630
- US-A1- 2017 139 794

## Description

L'invention s'intéresse au domaine de la surveillance d'infrastructures informatiques et plus particulièrement au domaine de l'analyse de la consommation des ressources d'une infrastructure informatique. L'invention se rapporte en particulier à un procédé d'analyse d'une consommation de ressources dans une infrastructure informatique. L'invention concerne également un dispositif d'analyse de la consommation d'une ressource dans une infrastructure informatique.

### [Art antérieur]

Les infrastructures informatiques représentent une grande partie de l'investissement d'une entreprise. Leur bonne gestion est un enjeu stratégique pour pouvoir maîtriser leurs coûts, mais également pour garantir un accès fiable et optimisé aux différentes données métiers du système d'information et assurer le bon fonctionnement dans le temps des infrastructures informatiques.

Au fil du temps, les administrateurs de systèmes d'information font généralement évoluer leur infrastructure informatique de façon à toujours proposer des services applicatifs métiers performants et adaptés à la demande de leur organisation. Par exemple, suite à une augmentation d'un certain groupe d'utilisateurs, il peut y avoir une augmentation de la consommation des ressources par certaines applications métiers et donc il peut être avantageux de réorganiser cette infrastructure informatique. Alternativement, un changement de briques applicatives, une modification d'une brique applicative entrainant une réduction de sa consommation de ressource, ou encore une amélioration d'une infrastructure informatique peuvent entrainer une augmentation des ressources disponibles. Il existe des procédés de mesures de performance (« Benchmark » en terminologie anglo-saxonne) ayant pour objectif de dimensionner, en fonction d'une utilisation donnée, une nouvelle infrastructure informatique.

Néanmoins, ces systèmes paraissent aujourd'hui insuffisants. En effet, lorsqu'une application est en production sur une infrastructure informatique, elle peut connaitre des évolutions importantes d'utilisation (i.e charge) dans le temps avec des variations dans la journée (plages horaires de travail versus reste de la journée), dans la semaine (mercredi journée de congé pour certains salariés, jours de repos versus jours travaillé), dans le mois et l'année (période de clôture mensuelle, trimestrielle, annuelle, etc).

Ces variations d'utilisation se traduisent concrètement au niveau matériel par des variations similaires de consommation de ressources. Ainsi, les administrateurs de systèmes d'information doivent également faire face à des variations de l'utilisation des ressources dans le temps, formant des périodes de contraintes plus ou moins fortes sur les infrastructures informatiques.

À ce jour, des solutions existent, permettant à travers des portails de surveiller l'utilisation actuelle des ressources et de la comparer à des niveaux seuils. Cette analyse automatique peut générer des alertes envoyées au responsable d'exploitation qui devra décider des actions correctives éventuelles à entreprendre. Néanmoins, il est difficile d'estimer avec précision la demande réelle en ressources dans un laps de temps donnée et en temps réel, l'administrateur devant se baser sur des faits passés et anticiper par lui-même un risque potentiel (i.e. surcharge, saturation ...). En outre, lors d'une montée en charge sur un système informatique, les saturations des ressources apparaissent l'une après l'autre. Dès lors, la saturation d'une première ressource ne permet pas d'observer les saturations suivantes puisque le système ne peut plus monter en charge dès qu'une saturation apparait. De plus, aucune de ces solutions ne génère des préconisations d'évolutions de l'infrastructure. C'est au responsable d'exploitation de déduire des alertes les évolutions qu'il convient de faire.

D'autres solutions ont été développées (US2017/0139794) consistant à déterminer des corrélations entre ressources afin de générer des modèles de corrélations pour détecter des erreurs dans les corrélations prédites par les modèles. Ces solutions passent par le calcul de fiabilité d'une corrélation et par une analyse de variation de corrélation. Toutefois, ces solutions sont chronophages pour les administrateurs et ne permettent pas d'estimer en temps réel la demande réelle en ressource. En effet, l'administrateur pourra détecter une anomalie de corrélation sans pouvoir prédire la consommation en ressource et donc détecter une anomalie de fonctionnement.

Ainsi, il existe un besoin pour de nouveaux procédés ou dispositifs permettant d'analyser puis de gérer une infrastructure informatique de façon à ce qu'elle dispose d'une quantité de ressource qui soit adaptée au juste besoin des applications du système d'information (SI). En particulier, il existe un besoin pour de nouvelles méthodes ou dispositifs permettant de prédire avec fiabilité et précision une anomalie telle qu'une surcharge ou une saturation de consommation d'une ressource d'une infrastructure informatique comprenant une pluralité de serveurs.

### [Problème technique]

L'invention a donc pour but de remédier aux inconvénients de l'art antérieur. En particulier, l'invention a pour but de proposer un procédé d'analyse d'une consommation de ressources dans une infrastructure informatique, ladite infrastructure informatique comprenant une pluralité de dispositifs informatiques, pour la prédiction d'une anomalie de consommation de ressource sur un dispositif informatique. Le procédé est rapide et simple à mettre en oeuvre, avec un nombre réduit d'étapes, et permet de maitriser les coûts liés à la gestion d'une infrastructure informatique. Le procédé permet particulièrement de prédire une anomalie de consommation de ressource, de prédire une saturation ou surcharge et donc un dysfonctionnement d'une infrastructure informatique. Le procédé permet en outre, de prédire des consommations futures en fonction de consommations courantes et en temps réel. De surcroit, le procédé permet générer de nouvelles valeurs de dimensionnement adaptées.

L'invention a en outre pour but de proposer un dispositif d'analyse d'une consommation de ressources dans une infrastructure informatique pour la prédiction d'une anomalie de consommation de ressources (i.e. surcharge ou saturation), ledit dispositif permettant de prédire l'évolution des consommations et les surcharges ou saturations des ressources, notamment, lors de l'augmentation de la charge et de prédire le dimensionnement des ressources d'un ou de plusieurs serveurs.

### [Brève description de l'invention]

L'invention est exposée dans le jeu de revendications annexé.

D'autres avantages et caractéristiques de l'invention apparaitront à la lecture de la description suivante donnée à titre d'exemple illustratif et non limitatif, en référence aux Figures annexées :
La Figure 1 représente un schéma fonctionnel du procédé de l'invention selon un mode de réalisation. Les étapes représentées par des pointillées sont facultatives.
La Figure 2 représente une illustration de fonctions de modélisations en fonction des ressources (CPU, DISK) et des périodes (jour 1, jour 2, jour 3, jour n).
La Figure 3 représente les sous-étapes d'une étape de détermination d'une pluralité de fonctions de modélisations selon un mode de réalisation de l'invention.
La Figure 4 représente une illustration de différentes configurations de combinaison de fonctions de modélisations pour une même ressource et sur une même période (configuration A : période divisée en quatre intervalles temporels, configuration B : période divisée en deux intervalles temporels, configuration C : période divisée en huit intervalles temporels).
La Figure 5 représente une illustration de fonctions de modélisations en fonction des ressources (CPU, DISK) et des périodes (jour 1, jour 2, jour 3, jour n) et intégrant des corrélations entre des fonctions de modélisation (C1, C2, C3).
La Figure 6 représente les sous-étapes d'une étape de détermination de corrélation entre fonctions de modélisations selon un mode de réalisation de l'invention.
La Figure 7 représente un schéma d'un dispositif selon un mode de réalisation de l'invention.
La Figure 8 représente un schéma d'une infrastructure informatique intégrant un dispositif selon un mode de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

### [Description de l'invention]

Dans la suite de la description, on entend par « **Ressource** » ou « **Ressource matérielle** », des paramètres, des capacités ou des fonctions de dispositifs informatiques permettant le fonctionnement d'une brique applicative, d'une application ou d'une chaine applicative. Un même dispositif informatique est associé généralement à plusieurs ressources. De même, une même ressource est généralement partagée entre plusieurs chaines applicatives. Par exemple, le terme « ressource » peut inclure : des disques réseaux caractérisé par exemple par leurs entrées/sorties, la lecture/écriture sur des disques, le taux d'utilisation de la mémoire, un réseau caractérisé par sa bande passante, un processeur caractérisé par exemple par son utilisation (en pourcent) ou le taux d'occupation de ses caches, une mémoire vive caractérisée par la quantité allouée, ou de façon plus globale le temps de latence d'un processus ou les pertes de paquets. Il n'est pas nécessaire de suivre toutes les ressources d'une infrastructure informatique pour mettre en oeuvre le procédé selon l'invention et il est possible de former un groupe de ressources critiques dont l'utilisation est particulièrement importante. On entend par « utilisation des ressources », la consommation d'une ressource par exemple par une application métier.

Par « **niveau d'utilisation d'une ressource** », on entend au sens de l'invention une valeur représentative de la consommation ou de l'occupation de ladite ressource lors du fonctionnement d'une chaine applicative. Par exemple, la valeur d'utilisation peut correspondre pour des disques réseaux à leurs entrées/sorties, la lecture/écriture sur des disques, le taux d'utilisation de la mémoire, pour un réseau à sa bande passante, pour des processeurs à leur utilisation (en pourcent) ou au taux d'occupation des caches, pour de la mémoire vive la quantité utilisée et pour des ports, le nombre de ports ayant été ouverts simultanément lors du fonctionnement du procédé. La valeur d'utilisation est avantageusement ramenée au pourcentage du niveau de la ressource.

Par « **seuil de surveillance prédéterminé** », on entend au sens de l'invention une valeur seuil de paramètre au-delà duquel une action sera enclenchée dans le cadre de l'invention. Un tel seuil permet généralement un bon fonctionnement d'une ressource et peut correspondre à un niveau maximum d'utilisation d'une ressource. Par exemple, cela peut correspondre aux limites maximales acceptables de consommations de ressources pour une structure informatique hébergeant une ou plusieurs briques applicatives. Ces limites peuvent être réelles ou hypothétiques et correspondent généralement un niveau d'utilisation au-delà duquel des dysfonctionnements peuvent survenir et ayant pour conséquence un arrêt de la ressource, de la structure informatique ou bien à tout le moins des baisses de qualités de service. Ce seuil peut être prédéterminé par un utilisateur via un fichier de configuration et une Interface Homme-Machine (IHM).

Par exemple, le tableau 1 ci-dessous présente les seuils prédéterminés de surveillance maximum pour trois ressources.

**[Tableau 1]**

| | CPU1 | Utilisation réseau | Utilisation Disque |
|---|---|---|---|
| Seuil de surveillance prédéterminé | 80 % | 350 KBps | 60 o/s |

Par « **infrastructure informatique** », on entend au sens de l'invention un ensemble de structures informatiques (i.e. dispositifs informatiques) apte à faire fonctionner une application ou une chaine applicative. La structure informatique peut être un serveur et peut par exemple être composée d'un serveur de présentation, d'un serveur métier et d'un serveur de données. L'infrastructure informatique peut également être un serveur test avec les mêmes ressources qu'un serveur de production ou bien un clone d'un serveur virtuel de production. De façon préférée, la structure informatique est un serveur.

L'expression « **chaine applicative** » au sens de l'invention correspond à un ensemble d'applications, reliées entre elles par un flot d'information et visant à proposer, au travers de plusieurs processus, une ou plusieurs fonctionnalités pouvant faire l'objet d'un accord de niveau de service. L'expression « **brique applicative** » au sens de l'invention correspond à une composante d'une application. La combinaison de briques applicatives est souvent nécessaire pour le fonctionnement d'applications, notamment d'applications métier, comme par exemple une application Web, une plateforme de partage de contenu ou une plateforme de calcul. Les briques applicatives de l'infrastructure informatique incluent, par exemple, un serveur ftp, un serveur de messagerie électronique, un serveur d'application Java et/ou une ou plusieurs bases de données.

Par « **sonde** » ou « **sonde informatique** », on entend au sens de l'invention un logiciel associé à un équipement qui permet d'effectuer, de gérer et faire remonter vers un équipement informatique des mesures destinées à informer entre autres de l'état de fonctionnement des ressources ou de niveau de service.

Par « **anomalie** » de ressources, on entend au sens de l'invention une surcharge des ressources, ou une saturation de ressources ou encore une diminution des ressources disponibles en dessous d'un seuil prédéterminé.

Par « **prédiction** » on entend par exemple au sens de l'invention l'action de calculer les consommations de ressources à venir d'une infrastructure informatique.

Par « **fonction de modélisation** » au sens de l'invention peut correspondre à une instruction, un protocole ou à une série d'instructions permettant de représenter et/ou modéliser un comportement de la consommation de ressource dans le temps.

Par « **fonction de corrélation** » au sens de l'invention on entend une instruction, un protocole ou une série d'instruction permettant un lien mathématique, statistique, ou encore de représenter une dépendance ou un rapport dû à un lien, potentiellement de causalité, entre plusieurs éléments, de préférence entre au moins deux fonctions de modélisation.

Par « **période** » au sens de l'invention on entend une durée dans le temps pouvant comprendre une pluralité d'intervalles de temps. Une période peut correspondre à un ou plusieurs jours, une ou plusieurs semaines, un ou plusieurs mois, une ou plusieurs années, mais aussi à des périodes plus courtes telles qu'une ou plusieurs heures.

Par « **intervalle temporel** » au sens de l'invention on entend un espace-temps, limité dans le temps entre deux instants. Un intervalle de temps peut correspondre à un ou plusieurs jours, une ou plusieurs semaines, un ou plusieurs mois, une ou plusieurs années, mais aussi à des périodes plus courtes telles qu'une ou plusieurs heures.

Le terme « **corrélation** » au sens de l'invention correspond une relation statistique, causale ou non, entre deux variables ou deux fonctions ou les valeurs de deux variables. Ce terme désigne par exemple la proximité entre deux fonctions et l'établissement d'une relation d'ordre. Le terme « causale » ou « causalité » au sens de l'invention correspond à une relation statistique causale entre deux fonctions. En particulier, une des fonctions est une cause qui est entièrement ou partiellement responsable de la valeur de l'autre fonction au travers d'un effet. La valeur de première fonction peut par exemple être considérée comme une cause d'une valeur (actuelle ou future) de la seconde fonction. Que cela soit pour la corrélation ou la causalité, une ou plusieurs fonctions peuvent avoir une relation statistique avec une ou plusieurs autres fonctions. En outre, une corrélation ou causalité indirect(e) au sens de l'invention correspond à l'existence d'une chaine de lien de corrélation ou de causalité entre une première fonction et une autre fonction. Par exemple, une première fonction est corrélée à une seconde fonction qui est elle-même corrélée à une troisième fonction qui est enfin corrélée avec une autre fonction.

Par « **sensiblement identique** » ou « **similaire** » on entend au sens de l'invention une valeur ou une fonction variant de moins de 30 % par rapport à la valeur ou fonction comparée, de préférence de moins de 20 %, de façon encore plus préférée de moins de 10 %.

On entend par « **traiter** », « **calculer** », « **déterminer** », « **afficher** », « **extraire** » « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

Dans la suite de la description, les mêmes références sont utilisées pour désigner les mêmes éléments.

Actuellement, les administrateurs de systèmes d'information doivent par eux même faire évoluer leur infrastructure informatique de façon à toujours proposer des services applicatifs métiers performants et adaptés à la demande de leur organisation. L'utilisation des ressources dans le temps peut être dépendante de nombreux facteurs. Par exemple, dans le cas d'une application métier comportant un calcul sur une première machine puis l'enregistrement des résultats sur une deuxième machine, le niveau d'utilisation des processeurs de la première machine va avoir un impact sur le niveau des écritures disques sur la deuxième machine. Il est alors difficile d'estimer avec précision la demande en ressources à venir, l'administrateur devant se baser sur des faits passés et anticiper par lui-même un risque potentiel ou une anomalie (i.e. surcharge, saturation ...).

Les inventeurs ont donc développé un nouveau procédé et dispositif permettant d'analyser finalement la consommation de ressource dans une infrastructure informatique et, après une première action de configuration visant à caractériser un comportement d'une infrastructure informatique, de calculer à partir de valeurs de consommation d'une première ressource à un temps donné, la consommation à venir pour une ou plus ressources. Cette solution passe en particulier par la détermination d'une pluralité de fonction de modélisation et de fonction de corrélation liant ces fonctions de modélisation.

**Selon un premier aspect,** l'invention porte sur un **procédé 1 d'analyse d'une consommation de ressource dans une infrastructure informatique.** Le procédé selon l'invention est particulièrement adapté à une infrastructure informatique comprenant une pluralité de dispositifs informatiques. Comme cela sera détaillé par la suite un tel procédé permet la prédiction d'une consommation de ressource et donc d'une potentielle anomalie de consommation d'une ressource d'un dispositif informatique. Il peut également permettre la génération de nouvelles valeurs de dimensionnement de l'infrastructure informatique. De telles nouvelles valeurs de dimensionnement pourront permettre d'éviter la survenue ultérieure d'une anomalie.

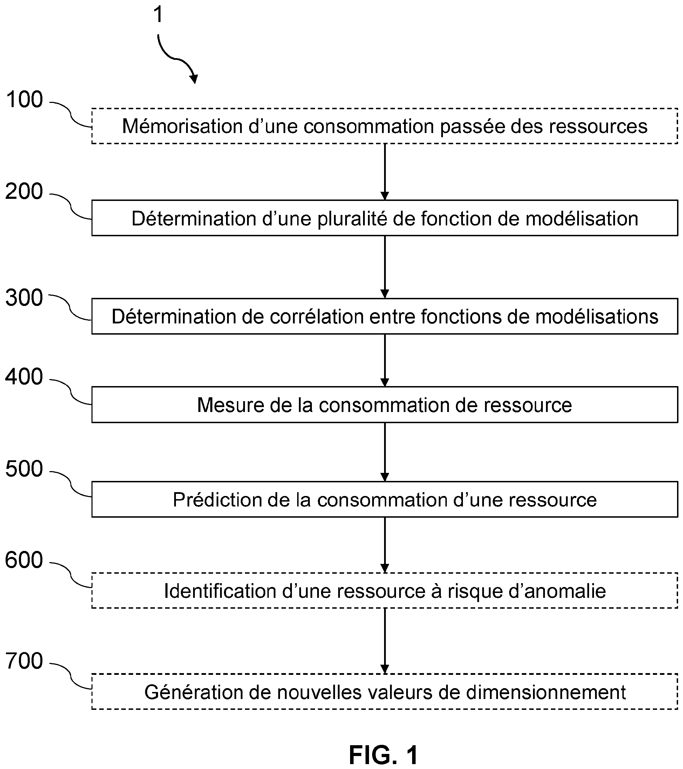

Comme cela est illustré à la **Figure 1**, le procédé selon l'invention comporte une première partie de configuration incluant la détermination 200 d'une pluralité de fonctions de modélisation ainsi que la détermination 300 de corrélations entre des fonctions de modélisation. Le procédé comporte ensuite, de préférence en continue, une mesure 400 de la consommation d'au moins une ressource et, de préférence en temps réel, la prédiction 500 de la consommation d'une ressource de l'infrastructure informatique.

Le procédé selon l'invention peut également comporter une étape de mémorisation 100 d'une consommation passée des ressources, une étape d'identification 600 d'une ressource à risque d'anomalie et une étape de génération 700 de nouvelles valeurs de dimensionnement.

Ces différentes étapes seront décrites plus en détail dans la suite de la description et en particulier en lien avec les figures.

Ainsi, le procédé selon l'invention peut comprendre **une étape 100 de mémorisation d'une consommation passée des ressources.** Cette étape peut être mise en oeuvre par un module de mémorisation en particulier configuré pour mémoriser des valeurs de consommations de ressources. Cette mémorisation peut être réalisée sur une durée de temps plus ou moins longue par exemple, sur un ou plusieurs jours, sur une ou plusieurs semaines, sur un ou plusieurs mois, sur une ou plusieurs années. Cette étape permet l'obtention d'un ou plusieurs profils de consommation de chaque ressource de chaque dispositif informatique de l'infrastructure informatique en fonction du temps. De préférence, il peut s'agir de la mémorisation d'une consommation passée. Comme détaillé par la suite, ces valeurs de consommation de ressource peuvent être générées grâce à des sondes. La mesure de la consommation d'une ressource sur une période de temps ou sur un intervalle de temps peut être mesurée lors de l'exécution des briques applicatives. Ces valeurs peuvent être alors obtenues par une pluralité de sondes configurées pour suivre le comportement de l'infrastructure informatique en production.

Le procédé peut comprendre une étape de détermination d'un niveau d'utilisation maximal de ressource pour chaque ressource de l'infrastructure informatique. Cette étape peut également être réalisée grâce à des sondes. Ceci permet de déterminer quel est le niveau d'utilisation maximal d'une ressource avant l'apparition d'une anomalie.

Le procédé selon l'invention comprend une **étape 200 de détermination d'une pluralité de fonctions de modélisations FM de consommation de ressource.** Chacune de ces fonctions de modélisations FM sont capables de modéliser l'évolution temporelle de la consommation d'une ressource sur un intervalle temporel. En particulier, chaque fonction de modélisation correspond à une formule mathématique représentant l'évolution de la consommation de la ressource sur un intervalle temporel. Cette modélisation concerne en particulier une période donnée et plus particulièrement un intervalle temporel de la période. Cette étape est de préférence réalisée par un module de modélisation. En particulier, une période donnée pourra comporter plusieurs intervalles temporel. Ainsi, l'évolution temporelle de la consommation d'une ressource pourra être modélisé pour chaque intervalle temporel d'une période donnée.

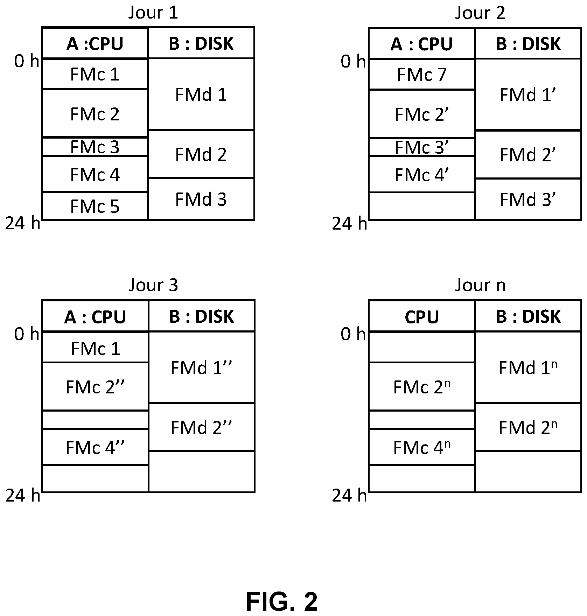

La consommation passée de chaque ressource peut être représentée par une fonction de modélisation FM. Un exemple d'une pluralité de fonctions de modélisations FM de consommation de ressource est illustré à la **Figure 2**.

La figure 2 représente plusieurs périodes (Jour 1, Jour 2, Jour 3, Jour 4) avec pour chacune de ces périodes deux ressources prises en considération (CPU et DISK). Dans la figure 2, une période correspond à une journée allant de 0 h à 24 h. Néanmoins, une période aurait également pu correspondre à une journée allant de 8h00 à 7h59. Une période selon l'invention peut correspondre, sans s'y limiter, à une heure, un jour, une semaine, un mois ou une année ou toute autre période de temps. Ainsi, pour une même période, l'évolution de la consommation des ressources peut être représentée par une pluralité de fonctions de modélisation. Les fonctions de modélisation et en particulier des combinaisons de fonctions de modélisation permettent de définir des intervalles de temps pour chaque période. Chaque intervalle correspond alors à une fonction de modélisation modélisant l'évolution temporelle de la consommation d'une ressource. En effet, une fonction de modélisation FM permet de modéliser, de préférence par une fonction mathématique, une consommation de ressource et son évolution. Par exemple, une fonction de modélisation peut être du type ax+b. Ainsi, pour chaque période, des intervalles sont identifiés durant lesquels l'évolution du niveau de consommation de la ressource peut être modélisé sous la forme d'une fonction de modélisation.

La figure 2 montre qu'une période peut être divisée en plusieurs intervalles temporels et que chacun de ces intervalles temporels peut être associé à une fonction de modélisation notée FMc 1, FMc 2, FMc 3, FMc 4, FMc 5. Chaque fonction de modélisation représente l'évolution temporelle de la consommation d'une même ressource sur un intervalle temporel. Ainsi, une pluralité de fonctions de modélisations différentes peut modéliser une même période.

En outre, une fonction de modélisation attribuée à un intervalle temporel peut ou non varier en fonction des périodes considérées. Par exemple, en référence à la figure 2, la fonction de modélisation FMc 2 ne varie pas ou peu entre le jour 1 FMc 2 et le jour 2 FMc 2'. Au contraire, la fonction de modélisation FMc 1 du jour 1 n'est pas retrouvée le jour 2 et ce même intervalle temporel du jour 2 est modélisé via une nouvelle fonction de modélisation FMc 7.

Sur la base de cette possible variabilité de fonction de modélisation entre période et tel qu'illustré sur la figure 2, il est possible d'identifier des fonctions de modélisation qui sont identiques ou similaires (i.e. sensiblement identiques) au fil des périodes telles que les fonctions de modélisation FMc 2ⁿ, FMc 4ⁿ, FMd 1ⁿ, FMd 2ⁿ.

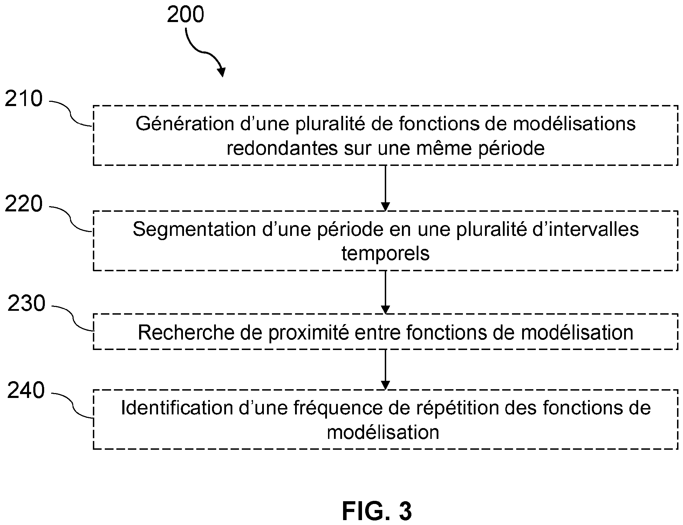

Comme illustré à la **figure 3**, l'étape 200 de détermination d'une pluralité de fonctions de modélisations FM peut comporter des sous-étapes avantageuses. Elle peut notamment comporter une **étape de génération 210 d'une pluralité de fonctions de modélisations redondantes sur une même période.** En effet, plusieurs combinaisons de fonctions de modélisations peuvent être générées à partir d'un même jeu de données.

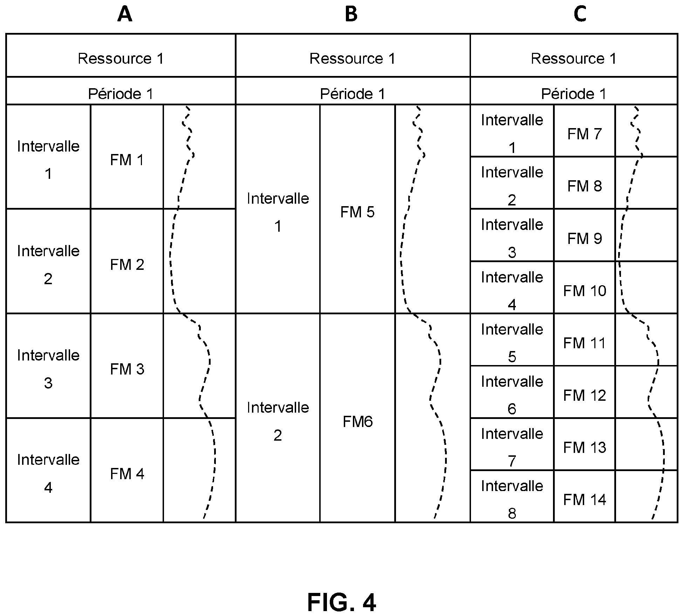

Comme illustré dans la figure 4, un même jeu de données pourra être modélisé par une combinaison de 4, 2 ou 8 fonctions de modélisation correspondant à 4, 2 ou 8 intervalles temporels pouvant être de durées variables.

Le procédé selon l'invention peut aussi comprendre une **étape 220 de segmentation d'une période en une pluralité d'intervalles temporels pour chaque ressource** de chaque dispositif 3 informatique. Les intervalles temporels peuvent être définis sur la base des fonctions de modélisation ou bien sur la base d'un découpage temporel prédéterminé. Pour une même ressource, les intervalles temporels sont de préférence identiques entre les périodes. Néanmoins, ils peuvent également être différents. Les intervalles temporels sont de préférence différents entre ressources différentes. Néanmoins, ils peuvent également être identiques.

La segmentation permet de représenter finement l'évolution de la consommation de chaque ressource par intervalle de temps. L'étape de segmentation peut être mise en oeuvre par un module de segmentation. La segmentation d'une période en une pluralité d'intervalles pour chaque ressource de chaque dispositif informatique permet l'obtention de plusieurs intervalles de temps pour une même période représentant l'évolution de la consommation de ressource pour chaque ressource de chaque dispositif informatique de l'infrastructure informatique. Par exemple, lorsque la période correspond à un jour, celle-ci peut être segmentée en une pluralité d'intervalles correspondant à une durée limitée en seconde, en minute ou en heure et selon une pluralité de fonctions de modélisations identiques ou différentes. Les intervalles de temps peuvent être similaires ou différents selon les fonctions de modélisations. En outre, les intervalles peuvent être définis selon la charge, le travail, le temps (heure, jour, mois, semaine etc...).

Selon un mode de réalisation optionnel ou complémentaire, pour une même période, plusieurs combinaisons d'intervalles temporels peuvent être définis avec des fonctions de modélisations différentes. Ainsi, le procédé selon l'invention peut comprendre la génération de plusieurs ensembles différents de fonctions de modélisations associés à une même période. Ceci permet l'obtention d'une pluralité de fonctions de modélisation et d'intervalles de temps pour une même période. Par exemple, la **figure 3** illustre une évolution sur une période de la consommation d'une ressource représentée par une courbe en pointillée. Comme illustré, pour une même ressource et une même période, le procédé selon l'invention peut permettre la détermination d'une pluralité de fonctions de modélisation et en particulier une pluralité de combinaisons de fonctions de modélisation. Ainsi, différents intervalles de temps peuvent être générés en fonction de fonctions de modélisation modélisant la consommation. En particulier, selon une configuration A, la consommation est modélisée par quatre fonctions de modélisation, tandis que selon une configuration B, la consommation est modélisée par quatre fonctions de modélisation et selon une configuration C, la consommation est modélisée par huit fonctions de modélisation. Ainsi, de façon préférée, l'étape de segmentation d'une période en une pluralité d'intervalles temporels comporte une étape de génération d'une pluralité de combinaisons de fonctions de modélisation pour chacune des périodes données, chacune des fonctions de modélisation étant associées à un intervalle temporel ; une étape d'identification des combinaisons de fonctions de modélisation étant les plus représentatives des périodes ; et une étape de sélection des intervalles temporels associés à ces combinaisons de fonctions de modélisation.

De préférence, ces étapes sont réalisées plusieurs fois pour toute la durée de la consommation de ressources passée et pour chaque ressource de l'infrastructure informatique.

En outre, le procédé comprend une **étape 230 de recherche de proximité entre fonctions de modélisation.** Une recherche de proximité 230 selon l'invention se fait entre fonctions de modélisation FM d'une même ressource et de périodes données différentes. Cette étape peut être mise en oeuvre par un module de consolidation. L'étape de recherche de proximité permet d'affiner les fonctions de modélisations en fonction des périodes pour des intervalles sensiblement identique. Ainsi, la recherche de proximité entre chaque fonction de modélisation comprend la recherche de proximité mathématique entre fonction de modélisation. Par exemple, pour une fonction de modélisation de type ax+b, de paramètre a et de paramètre b, la proximité s'évalue lorsque b est différent mais reste invariable sur tout l'intervalle, et lorsque a est différent mais reste invariable sur tout l'intervalle et conserve le même signe. Ainsi, la proximité est définie par la présence d'une fonction de modélisation proche mathématiquement d'une autre fonction de modélisation et dont les paramètres présentent des valeurs identiques ou sensiblement identiques. En particulier, l'étape 230 de recherche de proximité entre fonction de modélisation peut comporter le calcul d'une distance entre toutes les fonctions de modélisation générées ou la mise en oeuvre de méthodes univariées ou éventuellement de méthodes multivariées de type Analyse en Composantes Principales ou encore des classifications de préférence non supervisées telles que k-moyennes ou Classification ascendante hiérarchique.

Par ailleurs, cette recherche de proximité peut être réalisée sur plusieurs périodes, de préférence des périodes similaires, notamment sur les différents intervalles identifiés lors de l'étape de détermination d'une période donnée. Par période similaire on entend des périodes dont la durée dans le temps est identique ou sensiblement identique. Par exemple une période 1 correspondant à une journée est similaire à une période 2 correspondant également à une journée. La journée de la période 1 et la journée de la période 2 étant deux journées différentes.

Une telle étape de recherche de proximité comporte la création d'une pluralité de groupe de fonctions de modélisation, chaque groupe comportant des fonctions de modélisation classées comme identiques ou similaires lors de la recherche de proximité. L'étape de recherche de proximité 230 peut être suivie par la création d'une nouvelle fonction de modélisation formée à partir des différentes fonctions de modélisation considérées comme similaires.

La génération de fonctions de modélisation ou plus spécifiquement la recherche de proximité entre chaque fonction de modélisation sont suivies par **une étape 240 d'identification d'une fréquence de répétition des fonctions de modélisation.** Cette étape peut également être mise en oeuvre par le module de consolidation.

Une fois les fonctions de modélisation générées et une recherche de proximité réalisée, un procédé selon l'invention comporte une étape de calcul de la fréquence de répétitions des fonctions de modélisation similaires pour un même intervalle temporel sur l'ensemble des périodes étudiées. La fréquence de répétitions correspond à la fréquence d'apparition d'une fonction de modélisation identique ou similaire sur différentes périodes et sur des intervalles temporels sensiblement identiques. En outre la fréquence de répétition peut également correspondre à une proportion de répétition d'une fonction de modélisation au cours des périodes. En référence à la figure 2, la fonction de modélisation FMc 2 du jour 1 est retrouvée sous une forme similaire FMc 2' en jour 2 et en jour 3. Ainsi, la fréquence de répétition est égale à 100%. Toujours selon la figure 2, la fonction de modélisation FMc 1 du jour 1 est retrouvée sous une forme identique en jour 3. Ainsi, la fréquence de répétition est égale à 66%.

Ainsi plus une fonction de modélisation est retrouvée sur des intervalles similaires plus cette fonction de modélisation possède une fréquence de répétition élevée. Cette fréquence de répétition peut être comptabilisée de manière simple, c'est-à-dire que pour chaque fonction de modélisation identifiée la même valeur est ajoutée à chaque fréquence de répétition répétée. De préférence, la valeur d'implémentation de la fréquence de répétition possède la même unité, par exemple en pourcentage ou en valeur numérique ou alphanumérique, que le seuil de répétition prédéterminé. Ceci permet de définir une valeur de fréquence de répétition pour chaque fonction de modélisation et de comparer cette valeur au seuil de répétition préalablement défini. Ainsi, ceci permet ensuite une étape de sélection, pour chaque intervalle temporel, d'une fonction de modélisation la plus représentative de cet intervalle temporel au fil des périodes. De préférence, les fonctions de modélisation présentant une fréquence de répétition dont la valeur est inférieure à un seuil de répétition prédéterminé sont supprimées comme illustré à la figure 2. Cette étape peut donc bénéficier de la mémorisation préalable d'un seuil de répétition prédéterminé. Ce seuil de répétition peut varier en fonction des ressources ou des périodes. Le seuil de répétition permet de déterminer quelles fonctions de modélisation peuvent être conservées dans le cadre du procédé selon l'invention. L'identification d'une fréquence de répétition est de préférence réalisée pour chaque intervalle temporel et pour la pluralité de périodes similaires. En outre, de préférence, la recherche de proximité peut être réalisée pour toutes les ressources de l'infrastructure informatique et pour toute la durée de consommation passée. En outre, ces étapes peuvent aussi être appliquées lorsque les périodes sont variables et/ou les intervalles temporels sont différents entre périodes.

Le procédé selon l'invention comprend également une **étape 300 de détermination de corrélation entre lesdites fonctions de modélisation.** Cette étape peut être réalisée par un module de calcul.

L'étape de détermination 300 de corrélation peut comprendre le calcul d'au moins une corrélation entre fonctions de modélisation FM. De préférence, l'étape de détermination de corrélation comprend le calcul d'au moins une corrélation entre fonctions de modélisation FM modélisant des ressources différentes. De façon plus préférée, l'étape de détermination de corrélation comprend le calcul d'au moins une corrélation entre fonctions de modélisation FM modélisant des ressources identiques ou différentes pour des intervalles temporels différent.

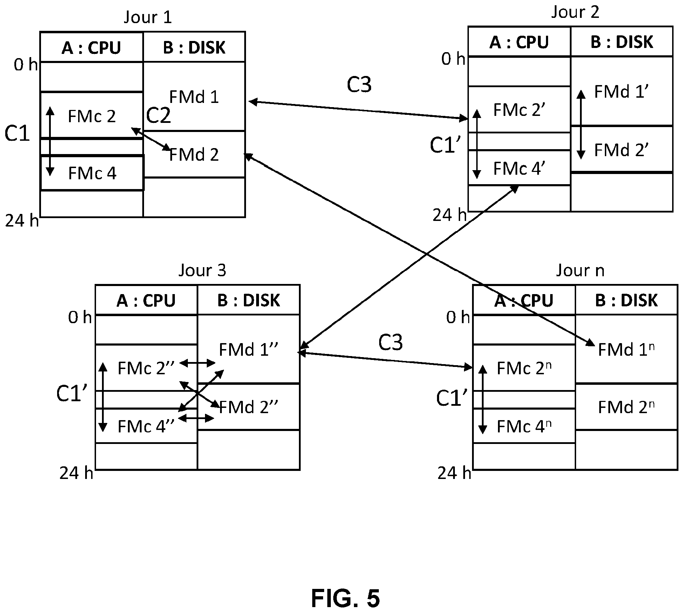

Ces étapes permettent de déterminer des corrélations C1 C2, C3 telles que représentées à la **figure 5** (une corrélation étant illustrée et représentée par une flèche). Par exemple, une corrélation C1 est calculée entre la fonction de modélisation FMc2 de la ressource CPU pour un premier intervalle temporel et la fonction de modélisation FMc4 de la même ressource CPU pour un second intervalle temporel sur la même période jour 1. Cette étape peut également permettre de calculer une corrélation C2 entre la fonction de modélisation FMc2 de la ressource CPU pour un premier intervalle temporel et la fonction de modélisation FMd2 d'une autre ressource DISK pour un second intervalle temporel sur la même période jour 1. En outre, cette étape peut également permettre de calculer une corrélation C3 entre la fonction de modélisation FMd1 de la ressource DISK pour un premier intervalle temporel et la fonction de modélisation FMc2' d'une autre ressource CPU pour un second intervalle temporel sur une autre période jour 2. Autrement dit, la fonction modélisant la consommation en espace disque sur un premier intervalle temporel peut être corrélée à une fonction modélisant la consommation en CPU sur un intervalle temporel du jour suivant.

Ainsi, pour chaque période, cette étape comprend la recherche d'une fonction de corrélation entre au moins deux fonctions de modélisation. La fonction de corrélation est définie comme étant une fonction mathématique dont les valeurs d'une fonction de modélisation une fois appliquée à la fonction de corrélation permettent l'obtention d'une valeur d'au moins une autre fonction de modélisation. Par exemple, une première fonction de modélisation dont la valeur est de xa+ b est corrélée par une fonction de corrélation de type multiplication par un facteur 2 à une seconde fonction de modélisation dont la valeur est de x2a + 2b. La fonction de corrélation peut correspondre à tout type d'opération(s) mathématique(s), et de tout signe par exemple, positif ou négatif.

Une fonction de corrélation peut être recherchée pour une même ressource et sur une même période, ou pour des ressources différentes sur une même période. Ceci permet de déterminer une corrélation entre ressources et particulièrement entre la consommation de différentes ressources pouvant être dépendantes les unes des autres pour une période donnée. En outre une fonction de corrélation pourra être établit entre des fonctions de modélisation de deux ressources différentes sur d'un même intervalle temporelle ou sur des intervalles temporels chevauchant.

Cependant afin de parfaire la prédiction, une fonction de corrélation peut également être recherchée pour une même ressource mais sur des périodes différentes. Ceci permet de prédire dans le temps la consommation des ressources. Une fonction de corrélation peut aussi être recherchée pour des ressources différentes sur des périodes différentes.

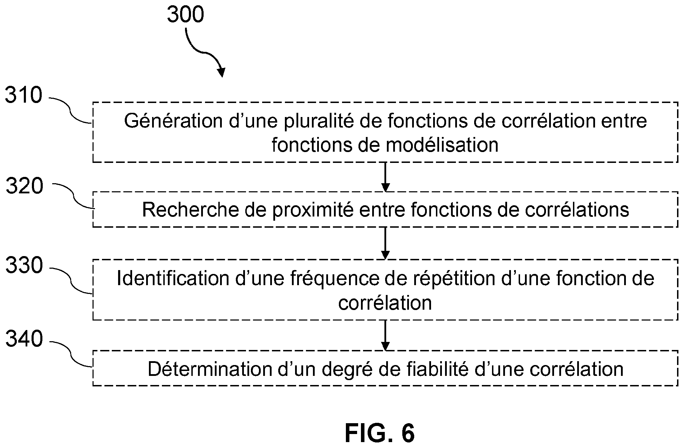

Avantageusement, l'étape de détermination 300 de corrélation entre lesdites fonctions de modélisation peut comporter une ou plusieurs sous-étapes telles qu'illustrées sur la **figure 6**.

En particulier, le procédé selon l'invention peut comprendre une **étape 310 de génération d'une pluralité de fonctions de corrélation entre fonctions de modélisation**. Ainsi, le procédé peut comporter un calcul de plusieurs fonctions de corrélations entre deux fonctions de modélisation. Cela peut entrainer la génération d'une pluralité de fonctions de corrélations capables de décrire avec plus ou moins de justesse les relations entre les fonctions de modélisation.

En outre, le procédé peut comprendre une **étape 320 de recherche de proximité entre fonctions de corrélation**. Une recherche de proximité 320 selon l'invention se fait de préférence entre fonctions de corrélation visant à lier des fonctions de modélisation identiques ou similaires. Cette étape peut être mise en oeuvre par un module de consolidation. L'étape de recherche de proximité permet d'affiner les fonctions de corrélation. Par exemple, pour une fonction de corrélation de type multiplication par un facteur 2, une proximité est considérée lorsque l'autre fonction de corrélation est aussi de type multiplication avec un facteur sensiblement égale à 2. Ainsi, la proximité est définie par la présence d'une fonction de corrélation proche mathématiquement d'une autre fonction de corrélation et dont les paramètres présentent des valeurs identiques ou sensiblement identiques. En particulier, l'étape 320 de recherche de proximité entre fonction de corrélation peut comporter le calcul d'une distance entre toutes les fonctions de corrélation générées ou la mise en oeuvre de méthodes univariées ou éventuellement de méthodes multivariées de type Analyse en Composantes Principales ou encore des classifications de préférence non supervisées telles que k-moyennes ou Classification ascendante hiérarchique.

Une telle étape de recherche de proximité comporte de façon préférée la création d'une pluralité de groupe de fonctions de corrélation, chaque groupe comportant des fonctions de corrélation classées comme similaires lors de la recherche de proximité. L'étape de recherche de proximité 320 peut être suivie par la création d'une nouvelle fonction de corrélation formée à partir des différentes fonctions de corrélation considérées comme similaires.

En outre, le procédé selon l'invention peut comprendre une **étape 330 d'identification d'une fréquence de répétition des fonctions de corrélation**. La fréquence de répétions de corrélation correspond à la fréquence d'apparition de la même fonction de corrélation entre au moins deux fonctions de modélisation. Ainsi plus une fonction de corrélation est identifiée fréquemment plus cette fonction de corrélation possède une fréquence de répétition élevée. Cette fréquence de corrélation peut être comptabilisée de manière simple, c'est-à-dire que pour chaque fonction de corrélation identifiée la même valeur est ajoutée à chaque fréquence de corrélation répétée. De préférence, la valeur d'implémentation de la fréquence de corrélation possède la même unité, par exemple en pourcentage ou en valeur numérique ou alphanumérique que le seuil de répétition de corrélation prédéterminé. Ceci permet de définir une valeur de fréquence de corrélation pour chaque fonction de corrélation et de comparer cette valeur à un seuil de répétition de corrélation préalablement défini. Comme illustré à la **figure 5**, la corrélation C1 est retrouvée sur plusieurs périodes sous sa forme C1'. Sur la base des périodes représentées sur le graphique elle présente une fréquence de répétition de 100 % alors que la corrélation C3 présente une fréquence de répétition de 66 %. Selon un mode de réalisation préféré, si aucune corrélation n'est déterminée pour une fonction de modélisation, cette fonction peut être supprimée. Selon un autre mode de réalisation préférée, lorsqu'une corrélation est trouvée, elle est considérée comme validée si elle est également retrouvée sur au moins une partie des autres périodes et de préférence sur l'ensemble des autres périodes.

Par ailleurs, une même fonction de modélisation peut être corrélée à plusieurs autres fonctions de modélisations. Ainsi le procédé peut comprendre une **étape 340 de détermination d'un degré de fiabilité d'une corrélation.** Le degré de fiabilité peut être déterminé sur la base des fréquences de répétition des fonctions de corrélation. Si une fonction de corrélation présente une fréquence élevée, le degré de fiabilité en est amélioré. Un tel degré de fiabilité permet d'assurer une prédiction optimale de la consommation des ressources. Optionnellement, un seuil prédéterminé de degré de fiabilité peut être paramétré. Dans ce cas, il est possible qu'une corrélation validée mais dont le degré de fiabilité est inférieur à un seuil prédéterminé de degré de fiabilité soit supprimée.

De façon optionnelle, l'ensemble des étapes précédentes peut être réalisées plusieurs fois. De préférence, ces étapes sont réalisées sur la totalité de la durée de la consommation passée. Grâce aux corrélations établies entre fonction de modélisation une prédiction des consommations futures peut être réalisée soit en fonction de la saisonnalité soit en fonction de la consommation d'autre ressource ou en fonction de la saisonnalité et de la consommation des autres ressources.

**Le procédé selon l'invention** comprend **une étape 400 de mesure de consommation de ressource.** Cette étape peut être réalisée grâce à une ou plusieurs sondes.

Cette étape comporte la mesure d'une valeur de consommation, de préférence en continu. Une mesure en continu correspond par exemple à des mesures réalisées à une fréquence inférieure ou égale à une heure, de préférence inférieure ou égale à trente minutes, de façon plus préférée inférieure ou égale à cinq minutes, par exemple inférieure ou égale à dix secondes. A noter que toutes les ressources ne seront pas nécessairement mesurées à une fréquence identique. La mesure de la consommation d'une ressource en continue, sur une période de temps et en particulier sur un intervalle de temps peut être mesurée de préférence lors de l'exécution de briques applicatives sur l'infrastructure informatique. Ces valeurs peuvent être obtenues par une pluralité de sondes configurées pour suivre le comportement de l'infrastructure informatique. De façon optionnelle, la pluralité de sondes peut permettre plus particulièrement d'identifier des périodicités dans la consommation des ressources.

La mesure de consommation de ressource permet d'obtenir un profil de consommation de chaque ressource en fonction du temps. Ceci permet également d'identifier des anomalies de ressources. Grâce à la mesure de la consommation, une valeur de consommation de ressource est obtenue. Avantageusement, cette valeur peut être obtenue en fonction du temps. En particulier, cette étape comporte la mesure d'une valeur de consommation d'une première ressource.

**Le procédé** comprend **une étape 500 de prédiction de la consommation d'une ressource**. Cette étape peut être mise en oeuvre par un module de prédiction. De façon préférée, l'étape 500 de prédiction permet une prédiction de la consommation d'une pluralité de ressource.

L'étape de prédiction comporte un calcul d'une valeur de consommation à venir d'une ressource à prédire. Ce calcul se fait à partir d'une valeur de consommation d'une première ressource et d'une corrélation préalablement calculée entre fonctions de modélisation FM. La corrélation préalablement calculée correspond à une valeur de corrélation entre une fonction de modélisation de la première ressource et une fonction de modélisation la ressource à prédire. Lorsque la ressource à prédire est la même que la première ressource alors un procédé selon l'invention permet de calculer une valeur de consommation à venir pour cette première ressource sur un intervalle temporelle ultérieur appartenant à une même période ou à une période différente. Alternativement, la ressource à prédire peut-être une deuxième ressource différente de la première ressource. Alors un procédé selon l'invention permet de calculer une valeur de consommation à venir pour cette deuxième ressource sur un intervalle temporelle, de préférence ultérieur, appartenant à une même période ou à une période différente. De façon préférée, le calcul d'une valeur de consommation à venir implique l'utilisation de deux fonctions de modélisation et une fonction de corrélation. En outre, cette étape peut être répétée plusieurs fois de façon à prédire la valeur de plusieurs ressources.

L'étape de prédiction peut donc comporter le calcul d'une valeur de consommation à venir d'une ressource à partir de la valeur de consommation de cette même ressource et d'une corrélation préalablement calculée entre fonctions de modélisation. L'étape de prédiction peut également comporter le calcul d'une valeur de consommation à venir d'une pluralité de ressources à partir de la valeur de consommation de la première ressource et d'une corrélation préalablement calculée entre fonctions de modélisation.

L'étape de prédiction peut également comporter le calcul d'une valeur de consommation à venir d'une ressource à partir de la valeur de consommation d'une pluralité de ressources et d'une corrélation préalablement calculée entre fonctions de modélisation.

Dans le cadre d'un procédé selon l'invention, la valeur de consommation à venir d'une ressource à prédire est de préférence déterminée en temps réel. En particulier, partant de la mesure de valeurs de consommation de ressource, un procédé selon l'invention est de préférence configuré pour générer une valeur de consommation à venir d'une ressource à prédire dans un délai inférieur ou égale à dix minutes, de façon plus préférée inférieur ou égale à cinq minutes, de façon encore plus préférée inférieur ou égale à une minute à compter d'une mesure de consommation d'une première ressource. Ainsi, un procédé selon l'invention est configuré pour prédire des valeurs de consommation en ressource au moins quinze minutes avant leur occurrence prévue, de façon plus préférée au moins une heure avant leur occurrence prévue et de façon encore plus préférée au moins plusieurs heures avant leur occurrence prévue par exemple au moins trois heures avant leur occurrence prévue.

Avantageusement, l'étape de prédiction permet de prédire la consommation d'une ou plusieurs ressources et ainsi de prévenir toute anomalie de la consommation de ressource sur une infrastructure informatique.

L'étape de prédiction permet d'anticiper la consommation de la pluralité de ressources de l'infrastructure informatique. Ainsi, il est possible de déterminer à l'avance une anomalie de la consommation de ressource pouvant entrainer une surconsommation, une surcharge, une diminution des ressources disponibles, une saturation etc... L'étape de prédiction peut également permettre d'identifier un risque potentiel de survenue d'une anomalie dans la consommation de ressources et dans le temps.

Ainsi, de façon avantageusement, un procédé selon l'invention peut comporter une **étape 600 d'identification d'une ressource à risque d'anomalie.** Cette étape peut être mise en oeuvre par un module de surveillance.

Dans le cadre d'une étape 600 d'identification d'une ressource à risque d'anomalie, la valeur calculée de consommation à venir d'une ressource à prédire peut-être comparée à un seuil prédéterminé de surveillance. Ainsi, un procédé selon l'invention peut comprendre une étape de configuration d'un seuil prédéterminé de surveillance, par exemple en fonction d'un niveau maximal d'utilisation d'une ressource.

En outre, si la prédiction de consommation en ressource dépasse le seuil de surveillance, le procédé peut comprendre une étape d'alerte comportant la transmission d'un message sur un client administrateur. Ceci permet d'informer les administrateurs qu'une anomalie risque de survenir. Ainsi, une action correctrice peut être mise en place avant que l'anomalie se produise et entraine un dysfonctionnement ou un arrêt dans le fonctionnement de l'infrastructure informatique.

Par ailleurs, le seul de surveillance peut être paramétrable. Par exemple, selon des niveaux de risque : faible, moyen élevé ou normal, alerte et critique. Le seuil de surveillance est également paramétrable en fonction des ressources prédites, des périodes ou même des intervalles. Le seuil de surveillance peut également prendre en compte la consommation des ressources si un intervalle est dépassé ou non respecté, une période est dépassée ou non respectée.

Selon un mode de réalisation, le procédé peut comprendre une étape de mise à jour des valeurs de consommation des ressources de l'infrastructure informatique. Ceci permet d'assurer la qualité de la prédiction. En outre, une mise à jour permet également de suivre l'évolution de l'infrastructure informatique et d'adapter les prédictions. Dans ce contexte, le procédé selon l'invention comporte avantageusement une répétition des étapes de mémorisation 100, détermination de fonction de modélisation 200 et détermination de corrélation 300 entre fonctions de modélisation.

Le procédé selon l'invention peut comprendre la mise en place d'actions correctrices lorsqu'un seuil est dépassé. Une action correctrice peut être sélectionnée parmi : l'attribution d'une ressource supplémentaire pour une période temps ou un intervalle de temps en fonction de corrélation préalablement calculée entre fonctions, une modification de la quantité de ressource allouée, pour un même intervalle la diminution ou l'augmentation d'une ressource en fonction de la qualité de service attendu en fonction des corrélations entre fonctions préalablement calculées.

Ainsi, avantageusement, le procédé selon l'invention peut comprendre **une étape 700 de génération de nouvelles valeurs de dimensionnement de l'infrastructure informatique.** Cette étape peut être mise en oeuvre par un module d'optimisation

En particulier, un procédé selon l'invention peut comprendre une génération d'au moins un plan de dimensionnement optimisé, ladite étape de génération comportant la sélection de nouvelles valeurs de quantité de ressources attribuées pour le plan de dimensionnement optimisé pour lesquelles la consommation des ressources sont inférieures à des valeurs de consommations maximales prédéterminées en fonction des prédictions établies.

Le procédé selon l'invention peut permettre de calculer le dimensionnement minimum en ressources, de l'infrastructure informatique, nécessaire à la bonne exécution des chaines applicatives. Il permet par exemple de déterminer le ou les dimensionnements minimaux permettant l'exécution des chaines applicatives métiers en respectant la consommation des ressources prédites dans le temps et les corrélations entre ressources.

L'étape de génération d'au moins un plan de dimensionnement optimisé peut comporter la génération de valeurs de quantité de ressources en fonction des prédictions, de la consommation de ressource mesurée et du niveau d'utilisation maximal de ressource. Ainsi, une pluralité de valeurs peut être générée, par exemple de façon aléatoire.

La génération de valeurs de quantité de ressources peut être suivie d'une étape de calcul de nouveaux niveaux d'utilisation maximale des ressources. Ce calcul peut être réalisé pour chaque valeur de quantité de ressources générées. Ceci permet d'optimiser la quantité de ressource qui sera attribuée et d'assurer le bon fonctionnement de l'infrastructure informatique. Par ailleurs, l'étape de génération peut comporter la sélection de nouvelles valeurs de quantité de ressources attribuées pour le plan de dimensionnement optimisé. Ces nouvelles valeurs sont sélectionnées parmi les valeurs générées lors de l'étape et correspondent aux valeurs pour lesquelles la prédiction respect le seuil de surveillance. Alternativement, l'administrateur SI peut sélectionner les valeurs de quantité de ressources adaptées.

En outre, le procédé selon l'invention peut comporter la génération d'une pluralité de plans de dimensionnement optimisés. La génération d'une pluralité de plans de dimensionnement optimisés permet à un administrateur SI de sélectionner celui dont les ressources disponibles et/ou prédites correspondent aux ressources nécessaires. Ainsi, dans le cas d'une génération d'une pluralité de plans de dimensionnement optimisés la sélection d'un plan de dimensionnement à appliquer peut-être laissée à un utilisateur. Néanmoins, avantageusement, le procédé selon l'invention peut comporter une étape de sélection automatisée d'un plan de dimensionnement optimisé.

Suite à l'étape de génération d'au moins un plan de dimensionnement optimisé ou suite à l'éventuelle sélection d'un plan de dimensionnement optimisé, le procédé selon l'invention peut comporter en outre **une étape de vérification du respect des seuils de surveillances** par exemple lors de sa mise en oeuvre sur une infrastructure informatique correspondant au nouveau plan de dimensionnement optimisé.

**Selon un deuxième aspect,** l'invention concerne **un dispositif 2 d'analyse de consommation d'une ressource dans une infrastructure informatique.**

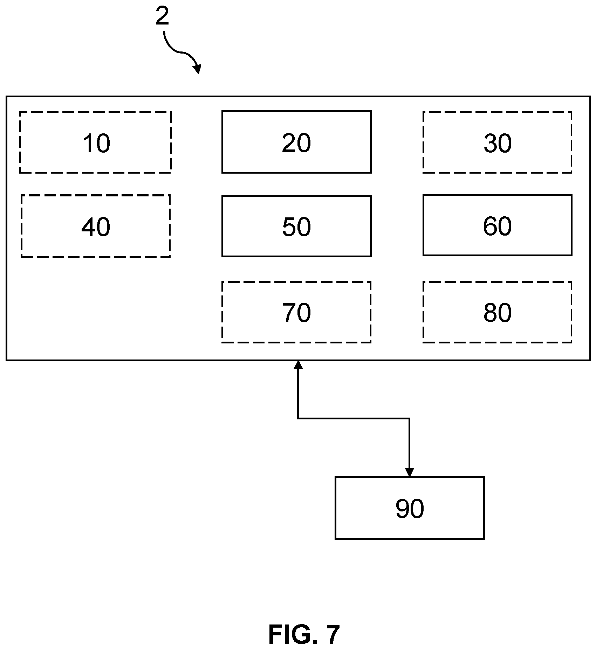

En particulier, comme illustré à la **figure 7**, le dispositif 2 d'analyse comporte un module de modélisation 20, un module de consolidation 40, un module de calcul 50, un module de prédiction 60 et au moins une sonde 90. Le dispositif 2 d'analyse peut également comporter un module de mémorisation 10, un module de segmentation 30, un module d'alerte 70 et un module de dimensionnement 80. Ces modules peuvent comporter un processeur pour l'exécution d'au moins une instruction. En outre, ils peuvent comporter ou être couplé à d'autres moyens tels que des combinaisons de processeurs, de mémoire ainsi que de codes supportant des instructions.

**Le module de mémorisation 10** est avantageusement configuré pour mémoriser des consommations de ressources, de préférence des consommations de ressources passées. Cette mémorisation peut être réalisée sur une durée de temps plus ou moins longue par exemple, sur un ou plusieurs jours, sur une ou plusieurs semaines, sur un ou plusieurs mois, sur une ou plusieurs années. Le module 10 de mémorisation peut comprendre une mémoire transitoire et/ou une mémoire non transitoire. La mémoire non transitoire peut être un support tel qu'un CDrom, une carte mémoire, un disque dur local ou un disque dur hébergé par un serveur distant. De préférence, le module de mémorisation prend la forme d'un disque dur local. Le module de mémorisation est notamment apte à enregistrer, par exemple sous la forme d'un ou plusieurs fichiers, des données générées par une IHM ou par des sondes de consommation ou encore des données acquises par l'intermédiaire d'un autre module. Ces données peuvent par exemple correspondre à des données relatives aux capacités de l'infrastructure informatique, aux besoins des chaines applicatives, aux ressources disponibles ou encore à des paramètres de fonctionnement prédéterminés ou à des périodes de temps (e.g. d'activités) identifiées.

Par exemple, le module de mémorisation est de préférence configuré pour mémoriser une ou plusieurs consommations d'une pluralité de ressource d'une infrastructure informatique. Pour cela, le module de mémorisation peut comprendre n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques. Le module de mémorisation peut comprendre une pluralité d'instructions ou de modules ou d'applications pour effectuer diverses fonctionnalités. Ainsi, le module de mémorisation peut mettre en oeuvre des routines, des programmes, ou des structures de données de type matricielle. Le module de mémorisation, comme les autres modules, peut par exemple être connecté avec les autres composants du système ou du dispositif.

Le module de mémorisation 10 est avantageusement configuré pour mémoriser au moins deux périodes de temps (ou d'activités) associées à des besoins en ressources différents.

Les données mémorisées ainsi que les périodes d'activités peuvent avoir été renseignées, dès la mise en route ou au cours du temps, par un utilisateur via une IHM. En effet, généralement l'administrateur du SI connait l'historique d'utilisation ainsi que les prévisions. Alternativement, les données mémorisées peuvent avoir été acquises par l'intermédiaire de sondes (sondes informatiques ou sondes de consommation). Il y a plus particulièrement, pour chaque période de temps (e.g. intervalle de temps associé à des besoins en ressources différents), la mémorisation d'une date de début et d'une date de fin de période et la mémorisation de besoin en ressource.

En outre, les valeurs mémorisées des besoins en ressources sont par exemple :
- une date de début de la période,
- une date de fin de la période, et/ou
- une liste des briques applicatives avec leurs besoins en ressources (e.g. mémoire vive consommées, mémoire disque consommée, taux d'utilisation de CPU)

Le dispositif 2 selon l'invention comprend un **module 20 de modélisation.** Le module de modélisation est configuré pour déterminer pour une période donnée, d'une pluralité de fonctions de modélisations de consommation de ressource, chacune desdites fonctions modélisant l'évolution temporelle de la consommation d'une ressource pour un intervalle temporel.

Le module de modélisation peut comporter un processeur pour l'exécution d'au moins une fonction de modélisation, pour modéliser l'évolution temporelle de la consommation dde ressource. En outre, le module de modélisation peut comporter ou être couplé à d'autres moyens tels que des combinaisons de processeurs, de mémoire ainsi que de codes supportant des instructions ou à un référentiel comportant une pluralité de fonctions mathématiques mémorisées. Le module de modélisation 20 est configuré pour attribuer à l'évolution temporelle de chaque ressource une fonction mathématique du référentiel, notamment au moyen de processeur.

Ainsi, chaque intervalle de la période sera modélisé et associé à une ou plusieurs fonctions de modélisation comprises dans la mémoire du module de modélisation, ce qui permet d'obtenir des modèles pour définir l'évolution de la consommation d'une ressource pour un intervalle temporel de la période et plus largement pour la période.

Cette ou ces fonctions de modélisation pourront par exemple être acquises par le module de modélisation, *via* un appel à un ou plusieurs fichiers de modélisation, mémorisée sur le module de mémorisation 10 ou bien à des instructions transmises à partir d'une interface (e.g. graphique). Ainsi, le module de modélisation peut être configuré pour recevoir et prendre en compte des fonctions de modélisation par exemple mémorisées sur une mémoire telle qu'une mémoire non-volatile.

En particulier, le module de modélisation selon l'invention est apte à, de préférence configuré pour, mémoriser une ou plusieurs fonctions de modélisation.

Le dispositif selon l'invention peut comprendre **un module 30 de segmentation.** Le module de segmentation est par exemple configuré pour segmenter une période en une pluralité d'intervalles pour chaque ressource de chaque dispositif informatique. Le module de segmentation permet l'obtention d'une pluralité d'intervalles pour une même période pouvant être utilisé pour modéliser l'évolution de la consommation de ressource pour chaque ressource de chaque dispositif informatique de l'infrastructure informatique selon une ou plusieurs fonctions de modélisation. Le module de segmentation 30 peut communiquer avec le module de modélisation 20 afin de segmenter une période selon les fonctions de modélisation modélisant au mieux une période. En outre, le module de segmentation 30 peut être paramétrable. Ainsi, le module de segmentation 30 peut être paramétré pour définir des intervalles de temps correspondant à une durée limitée en seconde, en minute, en heure ou toute autre durée limitée dans le temps. Le module de segmentation peut également être paramétrable selon la charge, le travail, le temps.

Le dispositif selon l'invention comprend **un module 40 de consolidation.** Le module de consolidation est configuré pour rechercher une proximité entre chaque fonction de modélisation de consommation déterminée et la pluralité d'intervalles d'une période pour chaque ressource de chaque chaine applicative. Ce module de consolidation 40 permet d'affiner les fonctions de modélisations en fonction des périodes pour des intervalles sensiblement identique. Le module de consolidation est également configuré pour identifier une fréquence de répétition des fonctions de modélisation. Le module de consolidation peut comprendre une mémoire apte à mémoriser un seuil de répétition préalablement déterminé. En outre, le module de consolidation est apte à définir une valeur de fréquence de répétition pour chaque fonction de modélisation et de comparer cette valeur au seuil de répétition préalablement défini. Ainsi, ceci permet d'affiner plus finement la recherche de proximité entre chaque fonction de modélisation de consommation. De préférence, les fréquences de répétition dont la valeur est inférieure au seuil de répétition prédéterminée sont supprimées.

Le dispositif selon l'invention comprend **un module 50 de calcul.** Le module de calcul est configuré pour la détermination de corrélation entre les fonctions de modélisation de consommation de ressource. En particulier, le module de calcul est configuré pour le calcul d'au moins une corrélation entre fonction de modélisation modélisant des identiques ou différentes, de préférence différentes, et de préférence pour des intervalles temporels différent.

Le module de calcul peut permettre un affinage par corrélation. En outre, le module de calcul peut être configuré pour déterminer une valeur fréquence de répétition de la fréquence de corrélation. Le module de calcul peut comprendre une mémoire apte à mémorisé un seuil de répétition de corrélation préalablement déterminé. En outre, le module de calcul est apte à définir une valeur de fréquence de répétition pour chaque fonction de modélisation et de comparer cette valeur au seuil de répétition préalablement défini. Ainsi, ceci permet une recherche de proximité entre chaque fonction de modélisation de consommation. De préférence, les fréquences de corrélation dont la valeur est inférieure au seuil de répétition de corrélation prédéterminée sont supprimées. Par ailleurs, le module de calcul peut également être configuré pour déterminer un degré de fiabilité. Le module de calcul est apte à croiser les différentes fonctions de corrélation ou des fréquences de répétition des fréquences de corrélation. Si plusieurs fréquences de corrélation sont retrouvées ou si plusieurs fréquences de répétition des fréquences de corrélation sont retrouvées, le module de calcul est apte à implémenter le degré de fiabilité. Ceci permet d'améliorer et d'affiner le degré de fiabilité.

Le dispositif selon l'invention comprend **une ou une pluralité de sondes 90**. Alternativement, le dispositif selon l'invention peut être couplé à une ou plusieurs sondes 90. Les sondes 90 sont configurées notamment pour mesurer la consommation en ressources de chaque ressource de chaque chaine applicative. La ou les sondes permettent de collecter des données sur la consommation des ressources de l'infrastructure informatique et plus particulièrement de chaque chaine applicative, ou machine, la composant. Plusieurs ressources peuvent être mesurées en parallèle.

Ces mesures peuvent être réalisées à partir d'une sonde, par exemple une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collecter » en anglais) pour les applications J2EE (pour « Java Enterprise Edition » en anglais).

Ces sondes peuvent être associées à chaque paramètre (e.g. ressource) pour remonter les informations de mesure ou métriques, représentant par exemple l'état de fonctionnement des ressources et particulièrement la consommation associée. Pour chaque paramètre, la ou les sondes définissent un identifiant de paramètre et une valeur de paramètre. Les valeurs des paramètres peuvent être suivies en continu ou à des intervalles configurables de façon à obtenir des informations pour chaque paramètre en fonction du temps. Ces informations peuvent être stockées dans une mémoire comme par exemple dans le module de mémorisation. Dans certains modes de réalisation, le dispositif comporte une IHM permettant de définir les sondes sur chaque machine qui remontent les métriques provenant de l'utilisation des ressources de la machine.

De telles consommations en ressources peuvent être mémorisées dans au moins un tableau matriciel mémorisé, dont le nombre de ressource définit une dimension du tableau matriciel, le nombre de plages horaires affectées définissant une autre dimension du tableau matriciel, et les pourcentages d'utilisation de la ressource constituant le coefficient d'une ligne ou colonne supplémentaire. Ces informations peuvent, de préférence, se retranscrire sous la forme d'une matrice Mj machine mémorisée dans une mémoire, chaque ligne de la matrice machine Mj représentant une ressource de la machine (CPU, RAM, ....etc.), chaque colonne de la matrice une plage horaire et chaque valeur présente dans une case de la ligne d'une ressource représentant la consommation de cette ressource pour la période horaire définie pour la colonne. Par ailleurs, les sondes peuvent être configurées pour mesurer le niveau d'utilisation maximal de ressource pour chaque ressource de l'infrastructure informatique.

Le dispositif selon l'invention comprend **un module 60 de prédiction.** Le module de prédiction est configuré pour prédire la consommation en ressource. En outre, le module de prédiction est configuré pour calculer une valeur de consommation à venir.

Le dispositif selon l'invention peut comprendre **un module 70 d'alerte** configuré pour émettre une alarme lorsqu'une prédiction, un seuil, ou un niveau d'utilisation ou de consommation n'est pas respecté ou dépassé. Ceci permet d'alerter les administrateurs.

**Un module de dimensionnement 80** selon l'invention est en particulier configuré pour sélectionner de valeurs de quantité de ressources attribuées pour l'au moins un plan de dimensionnement optimisé, pour lesquelles il n'y a plus de prédiction d'anomalies.

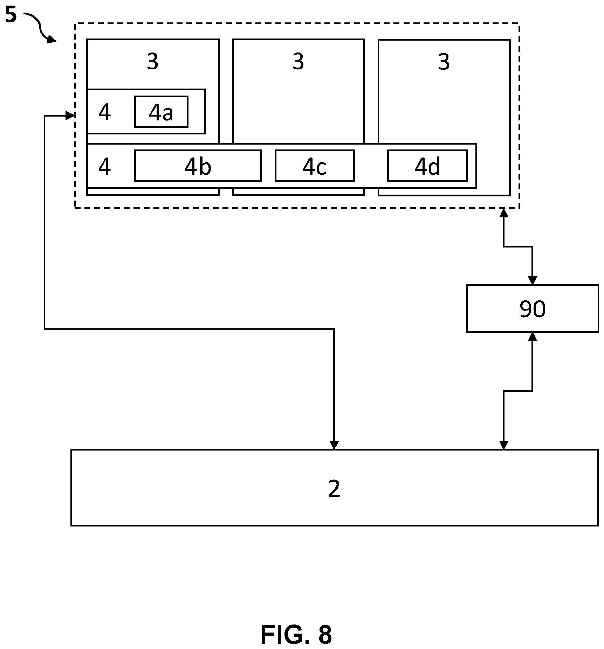

**Selon un autre aspect,** l'invention se rapporte à une **infrastructure 5 informatique** configurée pour permettre une analyse d'une consommation de ressources pour la prédiction d'une anomalie de consommation d'une de ses ressources, ladite infrastructure informatique pouvant comprenant, tel qu'illustré à la figure 8, un dispositif d'analyse selon l'invention.

L'infrastructure informatique comprend de préférence une pluralité de dispositifs informatiques 3 tels que des serveurs. En outre, elle comprend ou est couplée à un dispositif 2 d'analyse de consommation de ressources selon l'invention. Une infrastructure informatique 5 est plus particulièrement une infrastructure informatique en production dont les ressources sont utilisées par des **chaines 4 applicatives** constituées de briques applicatives 4a, 4b, 4c, 4d. Lorsque l'on prête une action à l'infrastructure informatique selon l'invention, celle-ci est en fait effectuée par un microprocesseur commandé par des codes instructions enregistrés dans une mémoire. Si l'on prête une action à une application, celle-ci est en fait effectuée par un microprocesseur de l'infrastructure informatique, dans une mémoire dans laquelle les codes instructions correspondant à l'application sont enregistrés. Une chaîne applicative comprend un ensemble de ressources qui sont utilisée entièrement ou partiellement par une pluralité de serveurs.

## Revendications

1. Procédé (1) d'analyse d'une consommation de ressources dans une infrastructure informatique, ladite infrastructure informatique comprenant une pluralité de dispositifs informatiques (3), pour la prédiction d'une anomalie de consommation de ressource sur un dispositif informatique (3), ledit procédé comprenant :
- une étape (200) de détermination, pour une période donnée comprenant une pluralité d'intervalles temporels, d'une pluralité de fonctions de modélisation (FM) de consommation de ressource, chacune desdites fonctions modélisant l'évolution temporelle de la consommation d'une ressource pour un intervalle temporel de la période, l'étape (200) de détermination étant réalisée pour au moins une première ressource et une ressource à prédire ;
- une étape (300) de détermination de corrélation entre lesdites fonctions de modélisation de consommation de ressource, ladite étape de détermination de corrélation comportant le calcul d'au moins une corrélation entre fonctions de modélisation (FM) pour des intervalles temporels différents ;
- une étape (400) de mesure d'une consommation de ressource, ladite étape comportant une mesure d'une valeur de consommation de la première ressource ; et
- une étape (500) de prédiction de la consommation de ressources de l'infrastructure informatique, ladite étape de prédiction comportant un calcul d'une valeur de consommation à venir de la ressource à prédire à partir de la valeur de consommation de la première ressource et d'une corrélation préalablement calculée entre fonctions de modélisation (FM), ladite corrélation préalablement calculée correspondant alors à une corrélation entre une fonction de modélisation de la première ressource et une fonction de modélisation de la ressource à prédire ;
ledit procédé étant **caractérisé en ce qu'**il comprend :
- une étape (230) de recherche de proximité entre fonctions de modélisation (FM) et de création d'une pluralité de groupes de fonctions de modélisation (FM) comportant des fonctions de modélisation classées comme identiques ou similaires lors de la recherche de proximité, ladite recherche de proximité se faisant entre fonctions de modélisation (FM) d'une même ressource et de périodes données différentes ;
- une étape d'identification (240) d'une fréquence de répétition des fonctions de modélisation (FM) et de sélection, pour chaque intervalle temporel, d'une fonction de modélisation la plus représentative de cet intervalle temporel pour un ensemble de périodes considérées, la fréquence de répétition correspondant à la fréquence d'apparition d'une fonction de modélisation identique ou similaire sur différentes périodes et sur des intervalles temporels sensiblement identiques.

2. Procédé (1) d'analyse selon la revendication 1, **caractérisé en ce que** le procédé comprend une étape de génération (210) d'une pluralité de fonctions de modélisations redondantes sur une même période.

3. Procédé (1) d'analyse selon l'une des revendications 1 ou 2, **caractérisé en ce que** le procédé comprend une étape (220) de segmentation de la période donnée en une pluralité d'intervalles temporels pour chaque ressource de chaque dispositif informatique (3).

4. Procédé (1) d'analyse selon la revendication 3, **caractérisé en ce que** les intervalles temporels issus de la segmentation de la période donnée sont définis en fonction des fonctions de modélisation et en fonction d'un découpage temporel prédéterminé.

5. Procédé (1) d'analyse selon l'une quelconque des revendications 1 à 4, **caractérisé en ce que** le procédé comprend une étape (310) de génération d'une pluralité de fonctions de corrélation entre fonctions de modélisation.

6. Procédé (1) d'analyse selon l'une quelconque des revendications 1 à 5, **caractérisé en ce que** la corrélation préalablement calculée est une fonction de corrélation entre deux fonctions de modélisation.

7. Procédé (1) d'analyse selon l'une quelconque des revendications 1 à 6, **caractérisé en ce qu'**il comprend une étape (330) d'identification d'une fréquence de répétition de corrélation, la fréquence de répétition de corrélation correspondant à la fréquence d'apparition de la même fonction de corrélation entre au moins deux fonctions de modélisation.

8. Procédé (1) d'analyse selon l'une quelconque des revendications 1 à 7, **caractérisé en ce qu'**il comprend une étape de détermination (340) d'un degré de fiabilité d'une corrélation et une suppression des corrélations présentant un degré de fiabilité inférieur à un seul prédéterminé.

9. Procédé (1) d'analyse selon l'une quelconque des revendications 1 à 8, **caractérisé en ce qu'**il comprend en outre une étape (600) d'identification d'une ressource à risque d'anomalie, ladite étape d'identification comportant une comparaison d'une valeur de consommation à venir d'une ressource à prédire à une valeur de seuil surveillance prédéterminée, la ressource à prédire devenant une ressource à risque d'anomalie lorsqu'une valeur de seuil surveillance prédéterminée est dépassée.

10. Procédé (1) d'analyse selon l'une quelconque des revendications 1 à 9, **caractérisé en ce qu'**il comprend en outre une étape (700) de génération de nouvelles valeurs de dimensionnement de l'infrastructure informatique, ladite étape (700) de génération comportant une sélection de nouvelles valeurs de quantité de ressources attribuées à au moins un dispositif informatique composant l'infrastructure informatique, lesdites nouvelles valeurs de quantité de ressources comportant, pour la ressource à prédire, une valeur de quantité de ressource attribuée supérieur à la valeur de consommation à venir calculée.

11. Procédé (1) d'analyse selon l'une quelconque des revendications 1 à 10, **caractérisé en ce que** l'étape de prédiction comporte le calcul d'une valeur de consommation à venir d'une ressource à partir de la valeur de consommation de cette même ressource et d'une corrélation préalablement calculée entre fonctions de modélisation.

12. Procédé (1) d'analyse selon l'une quelconque des revendications 1 à 11, **caractérisé en ce que** l'étape de prédiction comporte le calcul d'une valeur de consommation à venir d'une ressource à partir de la valeur de consommation d'une pluralité de ressources et d'une corrélation préalablement calculée entre fonctions de modélisation.

13. Dispositif (2) d'analyse de consommation de ressources dans une infrastructure informatique, ladite infrastructure informatique comprenant une pluralité de dispositifs informatiques, pour la prédiction d'une anomalie de consommation de ressource sur un dispositif informatique, ledit dispositif comprenant :
- un module (30) de modélisation configuré pour déterminer, pour une période donnée comprenant une pluralité d'intervalles temporels, une pluralité de fonctions de modélisation de consommation de ressource, chacune desdites fonctions modélisant l'évolution temporelle de la consommation d'une ressource pour un intervalle temporel de la période, , la détermination étant réalisée pour au moins une première ressource et une ressource à prédire ;
- un module (50) de calcul configuré pour la détermination de corrélation entre lesdites fonctions de modélisation de consommation de ressource, la détermination de corrélation comportant le calcul d'au moins une corrélation entre fonctions de modélisation, pour des intervalles temporels différents ;
- au moins une sonde (90) configurée pour mesurer la consommation de ressource, la mesure de consommation de ressource comportant la mesure d'une valeur de consommation de la première ressource ; et
- un module (60) de prédiction de la consommation de ressources de l'infrastructure informatique, configuré pour calculer une valeur de consommation à venir de la ressource à prédire, à partir de la valeur de consommation de la première ressource et d'une corrélation préalablement calculée entre fonctions de modélisation (FM), ladite corrélation préalablement calculée correspondant alors à une corrélation entre une fonction de modélisation de la première ressource et une fonction de modélisation de la ressource à prédire ;
ledit dispositif étant **caractérisé en ce qu'**il comprend :
- un module (40) de consolidation configuré pour rechercher une proximité entre chaque fonction de modélisation de la consommation déterminée, ladite recherche de proximité se faisant entre fonctions de modélisation (FM) d'une même ressource et de périodes données différentes, pour créer une pluralité de groupes de fonctions de modélisation comportant des fonctions de modélisation classées comme identiques ou similaires lors de la recherche de proximité, pour identifier une fréquence de répétition des fonctions de modélisation et pour sélectionner, pour chaque intervalle temporel, une fonction de modélisation la plus représentative de cet intervalle temporel pour un ensemble de périodes considérées, la fréquence de répétition correspondant à la fréquence d'apparition d'une fonction de modélisation identique ou similaire sur différentes périodes et sur des intervalles temporels sensiblement identiques.

14. Infrastructure (5) informatique comprenant une pluralité de dispositifs informatiques (3), ladite infrastructure (5) informatique comprenant un dispositif d'analyse selon la revendication 13.

## Patentansprüche

1. Verfahren (1) zur Analyse eines Ressourcenverbrauchs in einer Datenverarbeitungsinfrastruktur, wobei die Datenverarbeitungsinfrastruktur eine Vielzahl von Datenverarbeitungsgeräten (3) umfasst, um eine Anomalie des Ressourcenverbrauchs auf einem Datenverarbeitungsgerät (3) vorherzusagen, wobei das Verfahren die folgenden Schritte umfasst:
- einen Schritt (200) zur Bestimmung einer Vielzahl von Modellierungsfunktionen (FM) für den Ressourcenverbrauch für einen bestimmten Zeitraum, der eine Vielzahl von Zeitintervallen umfasst, wobei jede der Funktionen die zeitliche Entwicklung des Verbrauchs einer Ressource für ein Zeitintervall des Zeitraums modelliert, wobei der Schritt (200) zur Bestimmung für mindestens eine erste Ressource und eine vorherzusagende Ressource durchgeführt wird;
- einen Schritt (300) zur Bestimmung der Korrelation zwischen den Modellierungsfunktionen für den Ressourcenverbrauch, wobei der Schritt zur Bestimmung der Korrelation die Berechnung von mindestens einer Korrelation zwischen Modellierungsfunktionen (FM) für unterschiedliche Zeitintervalle umfasst;
- einen Schritt (400) zur Messung eines Ressourcenverbrauchs, wobei der Schritt eine Messung eines Verbrauchswertes der ersten Ressource umfasst; und
- einen Schritt (500) zur Vorhersage des Verbrauchs von Ressourcen der Datenverarbeitungsinfrastruktur, wobei der Schritt zur Vorhersage eine Berechnung eines zukünftigen Verbrauchswertes der vorherzusagenden Ressource ausgehend von dem Verbrauchswert der ersten Ressource und einer zuvor berechneten Korrelation zwischen Modellierungsfunktionen (FM) umfasst, wobei die zuvor berechnete Korrelation dann einer Korrelation zwischen einer Modellierungsfunktion der ersten Ressource und einer Modellierungsfunktion der vorherzusagenden Ressource entspricht;
**dadurch gekennzeichnet, dass** das Verfahren Folgendes umfasst:
- einen Schritt (230) zur Untersuchung der Nähe zwischen Modellierungsfunktionen (FM) und zur Erstellung einer Vielzahl von Gruppen von Modellierungsfunktionen (FM), die Modellierungsfunktionen umfassen, die bei der Untersuchung der Nähe als identisch oder ähnlich eingestuft wurden, wobei die Untersuchung der Nähe zwischen Modellierungsfunktionen (FM) derselben Ressource und bestimmten unterschiedlichen Zeiträumen erfolgt;
- einen Schritt (240) zur Identifizierung einer Wiederholungsfrequenz der Modellierungsfunktionen (FM) und zur Auswahl einer Modellierungsfunktion für jedes Zeitintervall, die für dieses Zeitintervall für eine Reihe von betrachteten Zeiträumen am repräsentativsten ist, wobei die Wiederholungsfrequenz der Häufigkeit des Auftretens einer identischen oder ähnlichen Modellierungsfunktion über verschiedene Zeiträume und über im Wesentlichen identische Zeitintervalle entspricht.

2. Verfahren (1) zur Analyse nach Anspruch 1, **dadurch gekennzeichnet, dass** das Verfahren einen Schritt (210) zur Erzeugung einer Vielzahl von redundanten Modellierungsfunktionen über einen gleichen Zeitraum umfasst.

3. Verfahren (1) zur Analyse nach einem der Ansprüche 1 oder 2, **dadurch gekennzeichnet, dass** das Verfahren einen Schritt (220) zur Segmentierung des bestimmten Zeitraums in eine Vielzahl von Zeitintervallen für jede Ressource jedes Datenverarbeitungsgeräts (3) umfasst.

4. Verfahren (1) zur Analyse nach Anspruch 3, **dadurch gekennzeichnet, dass** die Zeitintervalle aus der Segmentierung des bestimmten Zeitraums in Abhängigkeit von den Modellierungsfunktionen und in Abhängigkeit von einem vorgegebenen Zeitabschnitt definiert werden.

5. Verfahren (1) zur Analyse nach einem der Ansprüche 1 bis 4, **dadurch gekennzeichnet, dass** das Verfahren einen Schritt (310) zur Erzeugung einer Vielzahl von Korrelationsfunktionen zwischen Modellierungsfunktionen umfasst.

6. Verfahren (1) zur Analyse nach einem der Ansprüche 1 bis 5, **dadurch gekennzeichnet, dass** die zuvor berechnete Korrelation eine Korrelationsfunktion zwischen zwei Modellierungsfunktionen ist.

7. Verfahren (1) zur Analyse nach einem der Ansprüche 1 bis 6, **dadurch gekennzeichnet, dass** es einen Schritt (330) zur Identifizierung einer Wiederholungsfrequenz einer Korrelation umfasst, wobei die Wiederholungsfrequenz einer Korrelation der Häufigkeit des Auftretens derselben Korrelationsfunktion zwischen mindestens zwei Modellierungsfunktionen entspricht.

8. Verfahren (1) zur Analyse nach einem der Ansprüche 1 bis 7, **dadurch gekennzeichnet, dass** es einen Schritt (340) zur Bestimmung eines Zuverlässigkeitsgrads einer Korrelation und die Beseitigung von Korrelationen mit einem Zuverlässigkeitsgrad unter einer vorgegebenen Schwelle umfasst.

9. Verfahren (1) zur Analyse nach einem der Ansprüche 1 bis 8, **dadurch gekennzeichnet, dass** es außerdem einen Schritt (600) zur Identifizierung einer Ressource mit einem Risiko für eine Anomalie umfasst, wobei der Schritt zur Identifizierung einen Vergleich eines Wertes für den zukünftigen Verbrauch einer vorherzusagenden Ressource mit einem vorgegebenen Überwachungsschwellenwert umfasst, wobei die vorherzusagende Ressource zu einer Ressource mit einem Risiko für eine Anomalie wird, wenn ein vorgegebener Überwachungsschwellenwert überschritten wird.

10. Verfahren (1) zur Analyse nach einem der Ansprüche 1 bis 9, **dadurch gekennzeichnet, dass** es außerdem einen Schritt (700) zur Erzeugung neuer Werte für die Dimensionierung der Datenverarbeitungsinfrastruktur umfasst, wobei der Schritt (700) zur Erzeugung eine Auswahl neuer Mengenwerte der Ressourcen umfasst, die mindestens einem die Datenverarbeitungsinfrastruktur bildenden Datenverarbeitungsgerät zugewiesen sind, wobei die neuen Mengenwerte der Ressourcen für die vorherzusagende Ressource einen zugewiesenen Mengenwert der Ressource umfassen, der größer ist als der berechnete zukünftige Verbrauchswert.

11. Verfahren (1) zur Analyse nach einem der Ansprüche 1 bis 10, **dadurch gekennzeichnet, dass** der Schritt zur Vorhersage die Berechnung eines Wertes für den zukünftigen Verbrauch einer Ressource aus dem Verbrauchswert derselben Ressource und einer zuvor zwischen Modellierungsfunktionen berechneten Korrelation umfasst.

12. Verfahren (1) zur Analyse nach einem der Ansprüche 1 bis 11, **dadurch gekennzeichnet, dass** der Schritt zur Vorhersage die Berechnung eines Wertes für den zukünftigen Verbrauch einer Ressource aus dem Verbrauchswert einer Vielzahl von Ressourcen und einer zuvor zwischen Modellierungsfunktionen berechneten Korrelation umfasst.

13. Vorrichtung (2) zur Analyse eines Ressourcenverbrauchs in einer Datenverarbeitungsinfrastruktur, wobei die Datenverarbeitungsinfrastruktur eine Vielzahl von Datenverarbeitungsgeräten (3) umfasst, um eine Anomalie des Ressourcenverbrauchs auf einem Datenverarbeitungsgerät vorherzusagen, wobei die Vorrichtung Folgendes umfasst:
- ein Modul (30) zur Modellierung, das zur Bestimmung einer Vielzahl von Modellierungsfunktionen für den Ressourcenverbrauch für einen bestimmten Zeitraum, der eine Vielzahl von Zeitintervallen umfasst, konfiguriert ist, wobei jede der Funktionen die zeitliche Entwicklung des Verbrauchs einer Ressource für ein Zeitintervall des Zeitraums modelliert, wobei die Bestimmung für mindestens eine erste Ressource und eine vorherzusagende Ressource durchgeführt wird;
- ein Modul (50) zur Berechnung, das zur Bestimmung einer Korrelation zwischen den Modellierungsfunktionen für den Ressourcenverbrauch konfiguriert ist, wobei die Bestimmung der Korrelation die Berechnung von mindestens einer Korrelation zwischen Modellierungsfunktionen für unterschiedliche Zeitintervalle umfasst;
- mindestens eine Sonde (90), die zur Messung des Ressourcenverbrauchs konfiguriert ist, wobei die Messung des Ressourcenverbrauchs die Messung eines Verbrauchswertes der ersten Ressource umfasst; und
- ein Modul (60) zur Vorhersage des Verbrauchs von Ressourcen der Datenverarbeitungsinfrastruktur, das zur Berechnung eines Wertes für den zukünftigen Verbrauch der vorherzusagenden Ressource konfiguriert ist, ausgehend von dem Verbrauchswert der ersten Ressource und einer zuvor berechneten Korrelation zwischen Modellierungsfunktionen (FM), wobei die zuvor berechnete Korrelation dann einer Korrelation zwischen einer Modellierungsfunktion der ersten Ressource und einer Modellierungsfunktion der vorherzusagenden Ressource entspricht;
**dadurch gekennzeichnet, dass** die Vorrichtung Folgendes umfasst:
- ein Modul (40) zur Konsolidierung, das zur Untersuchung einer Nähe zwischen jeder Modellierungsfunktion des ermittelten Verbrauchs konfiguriert ist, wobei die Untersuchung der Nähe zwischen Modellierungsfunktionen (FM) derselben Ressource und unterschiedlichen Zeiträumen erfolgt, um eine Vielzahl von Gruppen von Modellierungsfunktionen zu erzeugen, die Modellierungsfunktionen umfassen, die bei der Untersuchung der Nähe als gleich oder ähnlich eingestuft wurden, um eine Wiederholungsfrequenz der Modellierungsfunktionen zu identifizieren und um für jedes Zeitintervall eine Modellierungsfunktion auszuwählen, die für dieses Zeitintervall für eine Reihe betrachteter Zeiträume am repräsentativsten ist, wobei die Wiederholungsfrequenz der Häufigkeit des Auftretens einer identischen oder ähnlichen Modellierungsfunktion über verschiedene Zeiträume und über im Wesentlichen identische Zeitintervalle entspricht.

14. Infrastruktur (5) zur Datenverarbeitung, die eine Vielzahl von Datenverarbeitungsgeräten (3) umfasst, wobei die Infrastruktur (5) zur Datenverarbeitung eine Vorrichtung zur Analyse nach Anspruch 13 umfasst.

## Claims

1. A method (1) for analysing a resource consumption in a computing infrastructure, said computing infrastructure comprising a plurality of computing devices (3) for predicting a resource consumption anomaly on a computing device (3), said method comprising:
- a step (200) of determining, for a given period comprising a plurality of time intervals, a plurality of resource consumption modelling functions (FM), each of said functions modelling the time change of the consumption of a resource for a time interval of the period, the determination step (200) being performed for at least a first resource and a resource to be predicted;
- a step (300) of determining correlation between said resource consumption modelling functions, said correlation determination step including calculating at least one correlation between modelling functions (FM) for different time intervals;
- a step (400) of measuring a resource consumption, said step including measuring a consumption value of the first resource; and
- a step (500) of predicting the resource consumption of the computing infrastructure, said prediction step including calculating a future consumption value of the resource to be predicted from the consumption value of the first resource and a correlation previously calculated between modelling functions (FM), said correlation previously calculated then corresponding to a correlation between a modelling function of the first resource and a modelling function of the resource to be predicted;
said method being **characterised in that** it comprises:
- a step (230) of searching for a proximity between modelling functions (FM) and creating a plurality of groups of modelling functions (FM) including modelling functions classified as identical or similar upon proximity searching, said proximity searching being performed between modelling functions (FM) of a same resource and of different given periods;
- a step (240) of identifying a repetition rate of the modelling functions (FM) and selecting, for each time interval, a modelling function most representative of this time interval for a set of considered periods, the repetition rate corresponding to the occurrence rate of an identical or similar modelling function over different periods and over substantially identical time intervals.

2. The analysis method (1) according to claim 1, **characterised in that** the method comprises a step of generating (210) a plurality of redundant modelling functions over a same period.

3. The analysis method (1) according to one of claims 1 or 2, **characterised in that** the method comprises a step (220) of segmenting the given period into a plurality of time intervals for each resource of each computing device (3).

4. The analysis method (1) according to claim 3, **characterised in that** the time intervals from segmenting the given period are defined as a function of the modelling functions and as a function of a predetermined time slicing.

5. The analysis method (1) according to any of claims 1 to 4, **characterised in that** the method comprises a step (310) of generating a plurality of correlation functions between modelling functions.

6. The analysis method (1) according to any of claims 1 to 5, **characterised in that** the correlation previously calculated is a correlation function between two modelling functions.

7. The analysis method (1) according to any of claims 1 to 6, **characterised in that** it comprises a step (330) of identifying a correlation repetition rate, the correlation repetition rate corresponding to the occurrence rate of the same correlation function between at least two modelling functions.

8. The analysis method (1) according to any of claims 1 to 7, **characterised in that** it comprises a step of determining (340) a reliability degree of a correlation and deleting correlations having a reliability degree lower than a predetermined threshold.

9. The analysis method (1) according to any of claims 1 to 8, **characterised in that** it further comprises a step (600) of identifying a resource at risk of anomaly, said identification step including comparing a future consumption value of a resource to be predicted with a predetermined monitoring threshold value, the resource to be predicted becoming a resource at risk of anomaly when a predetermined monitoring threshold value is exceeded.

10. The analysis method (1) according to any of claims 1 to 9, **characterised in that** it further comprises a step (700) of generating new dimensioning values of the computing infrastructure, said generation step (700) including selecting new amount values of resources assigned to at least one computing device making up the computing infrastructure, said new amount value of resources including, for the resource to be predicted, an assigned resource amount value greater than the future consumption value calculated.

11. The analysis method (1) according to any of claims 1 to 10, **characterised in that** the prediction step includes calculating a future consumption value of a resource from the consumption value of this same resource and a correlation previously calculated between modelling functions.

12. The analysis method (1) according to any of claims 1 to 11, **characterised in that** the prediction step includes calculating a future consumption value of a resource from the consumption value of a plurality of resources and a correlation previously calculated between modelling functions.

13. A device (2) for analysing resource consumption in a computing infrastructure, said computing infrastructure comprising a plurality of computing devices, for predicting a resource consumption anomaly on a computing device, said device comprising:
- a modelling module (30) configured to determine, for a given period comprising a plurality of time intervals, a plurality of resource consumption modelling functions, each of said functions modelling the time change of the consumption of a resource for a time interval of the period, the determination being performed for at least a first resource and a resource to be predicted;
- a calculation module (50) configured for correlation determination between said resource consumption modelling functions, the correlation determination including calculating at least one correlation between modelling functions, for different time intervals;
- at least one probe (90) configured to measure the resource consumption, measuring the resource consumption including measuring a consumption value of the first resource; and
- a module (60) for predicting the resource consumption of the computing infrastructure, configured to calculate a future consumption value of the resource to be predicted, from the consumption value of the first resource and a correlation previously calculated between modelling functions (FM), said correlation previously calculated then corresponding to a correlation between a modelling function of the first resource and a modelling function of the resource to be predicted;
said device being **characterised in that** it comprises:
- a consolidation module (40) configured to search for a proximity between each modelling function of the consumption determined, said proximity search being performed between modelling functions (FM) of a same resource and of different given periods, to create a plurality of groups of modelling functions including modelling functions classified as identical or similar upon proximity searching, to identify a repetition rate of the modelling functions and to select, for each time interval, a modelling function most representative of this time interval for a set of periods considered, the repetition rate corresponding to the occurrence rate of an identical or similar modelling function over different periods and over substantially identical time intervals.

14. A computing infrastructure (5) comprising a plurality of computing devices (3), said computing infrastructure (5) comprising an analysis device according to claim 13.
